# EUROPÄISCHE PATENTANMELDUNG

(11) **EP 1 666 423 A1**
(43) Veröffentlichungstag der Anmeldung: **07.06.2006**
(21) Anmeldenummer: 05026474.6
(22) Anmeldetag: 05.12.2005
(51) Int. Cl.: C02F 1/467, C02F 9/00

(54) **Verfahren und Vorrichtung zur Abwasseraufbereitung**

(30) Priorität: 03.12.2004 DE 102004058552
(71) Anmelder: Aqua Biotec GmbH, 23562 Lübeck (DE)
(72) Erfinder: Rüdiger, Andreas, Dr., 23564 Lübeck (DE)
(74) Vertreter: Vollmann, Heiko

(57) **Zusammenfassung**

Bei dem Verfahren zur Abwasseraufbereitung werden in einer ersten Aufbereitungsstufe (2) biologisch abbaubare Abwasserinhaltsstoffe abgebaut und in einer nachgeordneten zweiten Aufbereitungsstufe (12) biologisch nicht abbaubare Abwasserinhaltsstoffe in biologisch abbaubare Komponenten umgewandelt, wobei die in der zweiten Aufbereitungsstufe (12) in biologisch abbaubare Komponenten umgewandelten Abwasserinhaltsstoffe wieder der ersten Aufbereitungsstufe (2) zugeführt werden, in welcher sie biologisch abgebaut werden.

## Beschreibung

Die Erfindung betrifft ein Verfahren zur Abwasseraufbereitung mit den im Oberbegriff des Anspruchs 1 angegebenen Merkmalen sowie eine Abwasseraufbereitungsanlage zum Ausführen dieses Verfahrens.

Zur Abwasseraufbereitung ist es bekannt, physikalische, physikalischchemische sowie biologische Aufbereitungsverfahren einzusetzen, wobei sich bei der Aufbereitung industrieller Abwässer biologische Verfahren gegenüber den anderen Verfahren wegen ihres besonders günstigen Kosten-Nutzen-Verhältnisses durchgesetzt haben. Bei biologischen Verfahren zur Abwasseraufbereitung bauen Mikroorganismen biologisch abbaubare Inhaltsstoffe des Abwassers zu Zellmaterial bzw. zu Gasen wie z.B. Kohlendioxid oder Methan ab bzw. um. Insbesondere industrielle Abwässer können neben diesen biologisch abbaubaren Inhaltsstoffen aber auch nichtorganische Inhaltsstoffe aufweisen, die teilweise toxischer Natur sind und biologisch nicht abgebaut werden können. Gleiches gilt für einige Farbstoffe, die mittels biologischer Verfahren nicht abbaubar sind. Steigende Anforderungen an die Wasserqualität seitens der Gesetzgeber sowie der Betreiber von Abwasserkläranlagen verlangen auch die Entfernung dieser nicht biologisch abbaubaren Inhaltsstoffe und/oder eine Entfärbung des Abwassers.

Bei der Reinigung von Abwässern mit biologisch schwer bzw. nicht abbaubaren Inhaltsstoffen wird das Abwasser üblicherweise nach einer biologischen Aufbereitung einem physikalischen oder einem physikalisch-chemischen Aufbereitungsverfahren zugeführt, in welchem die biologisch nicht abbaubaren Inhaltsstoffe entweder vollständig eliminiert werden oder in biologisch abbaubare Bestandteile umgewandelt werden. Dabei ist es Stand der Technik, bei letztgenannter Umwandlung in biologisch abbaubare Bestandteile, dreistufige Aufbereitungsanlagen zu verwenden, in denen in einem ersten Anlagenbereich eine biologische Aufbereitung des Abwassers erfolgt, das Abwasser anschließend in einen zweiten Anlagenbereich geleitet wird, in dem die biologisch nicht abbaubaren Inhaltsstoffe in biologisch abbaubare Komponenten zerlegt werden und das Abwasser danach einem dritten Anlagenbereich zugeführt wird, in dem diese biologisch abbaubaren Komponenten auf biologischem Wege abgebaut werden. Nachteilig sind bei diesen Aufbereitungsanlagen, wie auch bei Aufbereitungsanlagen, in denen die biologisch nicht abbaubarer Verunreinigungen des Abwassers vollständig eliminiert werden, deren hohe Anlagen- und Betriebskosten.

Vor diesem Hintergrund liegt der vorliegenden Erfindung die Aufgabe zugrunde, ein Verfahren zur Abwasseraufbereitung zu schaffen, mit dem Abwasser zuverlässig zu Wasser der geforderten Qualität aufbereitet werden kann, wobei die Kosten der Abwasseraufbereitung möglichst gering gehalten werden sollen.

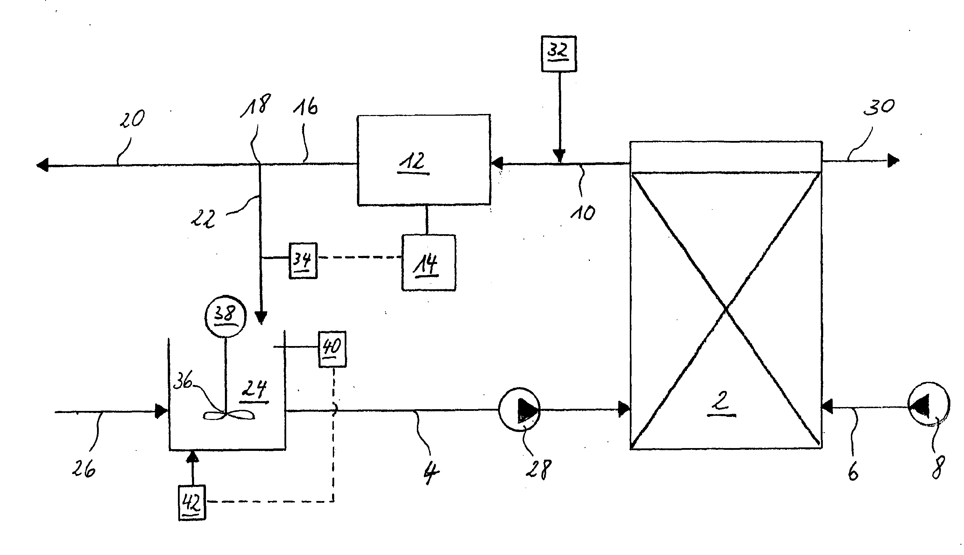

Diese Aufgabe wird erfindungsgemäß durch ein Verfahren zur Abwasseraufbereitung mit den im Anspruch 1 angegebenen Merkmalen gelöst. Bevorzugte Ausführungsformen ergeben sich aus den Unteransprüchen, der nachfolgenden Beschreibung und der Zeichnung.

Die Erfindung schafft ein Verfahren zur Wasseraufbereitung, bei dem in einer ersten Aufbereitungsstufe biologisch abbaubare Abwasserinhaltsstoffe abgebaut werden und in einer nachgeordneten zweiten Aufbereitungsstufe biologisch nicht abbaubare Abwasserinhaltsstoffe in biologisch abbaubare Komponenten umgewandelt werden, wobei diese dann biologisch abbaubaren Komponenten wieder der ersten Aufbereitungsstufe zugeführt werden.

Grundgedanke der Erfindung ist es, die in der zweiten Aufbereitungsstufe in biologisch abbaubare Komponenten umgewandelten Abwasserinhaltsstoffe wieder der ersten Aufbereitungsstufe zuzuführen, in welcher sie biologisch abgebaut werden, wodurch die sonst übliche dritte Aufbereitungsstufe entfallen kann.

Das Abwasser wird in der ersten Aufbereitungsstufe einem biologischen Aufbereitungsverfahren unterzogen, in dem die biologisch abbaubaren Inhaltsstoffe des Abwassers z.B. von Bakterien in Zellmaterial und Gase, wie beispielsweise Kohlendioxid, Methan, Schwefelwasserstoff und andere Gase umgewandelt werden. Dabei ist es prinzipiell möglich, als biologisches Aufbereitungsverfahren sowohl ein Verfahren mit einer aeroben Verfahrensführung als auch ein Verfahren mit einer anaeroben Verfahrensführung einzusetzen, wobei auch eine Kombination aus aerober und anaerober Verfahrensführung denkbar ist.

In der ersten Aufbereitungsstufe wird das Abwasser soweit aufbereitet, dass in ihm im Wesentlichen nur noch Verunreinigungen enthalten sind, die auf biologischem Wege nicht abbaubar sind. Aus diesem Grund wird das Abwasser nach der biologischen Aufbereitung der zweiten Aufbereitungsstufe zugeführt, in der die dann noch im Abwasser enthaltenen unerwünschten Inhaltsstoffe, die biologisch nicht bzw. nur schwer abbaubar sind, in Komponenten umgewandelt werden, die biologisch abbaubar sind. In der zweiten Aufbereitungsstufe können ggf. in dem Abwasser schwebende Festkörperteilchen von dem Abwasser mechanisch getrennt werden und in dem Abwasser gelöste biologisch nicht abbaubare Verbindungen auf chemischem/physikalischem Wege in biologisch abbaubare Komponenten zerlegt werden. So steht am Ende dieser zweiten Aufbereitungsstufe ein Abwasser zur Verfügung, dass nur noch biologisch abbaubare Verunreinigungen aufweist.

Dieses Abwasser wird nun wieder der ersten Aufbereitungsstufe zugeführt, in der die letzten verbliebenen, jetzt biologisch abbaubaren Verunreinigungen von den Mirkoorganismen abgebaut werden, so dass am Ende dieser Aufbereitungsstufe das gereinigte Wasser zur Verfügung steht, so dass zur Aufbereitung des Abwassers vorteilhafterweise nur zwei Aufbereitungsstufen erforderlich sind, was einen gegenüber dem Stand der Technik deutlich geringeren Anlagenaufwand erforderlich macht.

Bevorzugt wird das Abwasser in der ersten und der zweiten Aufbereitungsstufe zumindest teilweise in einem Kreislauf geführt, um eine kontinuierliche Wasseraufbereitung zu gewährleisten. Hierzu wird das in der ersten Aufbereitungsstufe biologisch aufbereitete Abwasser zumindest ein weiteres Mal dieser ersten Aufbereitungsstufe zugeführt, wobei zwischenzeitlich in der zweiten Aufbereitungsstufe die biologisch nicht abbaubaren Abwasserinhaltsstoffe in biologisch abbaubare Komponenten umgewandet werden.

Als biologische Verfahren zur Abwasseraufbereitung sind alle Verfahren denkbar, bei denen Wasserverunreinigungen durch die Stoffwechselaktivität von Bakterien bzw. Mikroorganismen abgebaut werden. Bevorzugt erfolgt der Abbau der biologisch abbaubaren Abwasserinhaltsstoffe aber mittels der Biofiltration. Diese eignet sich besonders für die Reinigung von Industrieabwässern, die beispielsweise mit Lösemitteln oder Stickstoff belastet sind.

Die Umwandlung der biologisch nicht abbaubaren Abwasserinhaltsstoffe in biologisch abbaubare Komponenten erfolgt vorzugsweise mittels Oxidation. Hierbei wird die reaktive Wirkung eines Oxidationsmittels, bei dem es sich beispielsweise um Ozon, Wasserstoffperoxyd, Permanganat, Chlordioxid oder Chlorgas handeln kann genutzt, organische Stoffe in anorganische Verbindungen umzuwandeln. Dies ermöglicht eine schnelle Inaktivierung von Bakterien und Viren und führt so zu einer Entkeimung des Abwassers. Des Weiteren ist bei der chemischen Oxidation vorteilhaft, dass nach der Abwasseraufbereitung nur wenige Reststoffe entfallen, die kostenaufwendig entsorgt werden müssen. Darüber hinaus kann bei der Oxidation die selektive Reaktion eines Oxidationsmittels mit ungesättigten Verbindungen genutzt werden, die ansonsten nur schwer und biologisch nicht abbaubar sind und in biologisch abbaubare Komponenten überführt werden.

Bevorzugt werden als Oxidationsmittel Hydroxylradikale eingesetzt, da sie ein besonders hohes spezifisches Oxidationspotenzial aufweisen. Vorteilhaft wird daher in der zweiten Aufbereitungsstufe das Abwasser mittels Elektrolyse zur Bildung dieser Hydroxylradikale gespalten. Im Gegensatz zu bekannten Elektrolyseverfahren, bei denen üblicherweise Wasser in Wasserstoff und Sauerstoff gespalten wird, werden bei dem erfindungsgemäßen Verfahren zur Abwasseraufbereitung bei der Spaltung des Wassers anstelle des Sauerstoffs entweder Ozon oder die hochreaktiven Hydroxylradikale gebildet. Mit den Hydroxylradikalen ist es möglich, organische Stoffe, wie z.B. Öl-Wasser-Emulsionen, Phenole, endokrine Disruptoren, Hormone, EDTA, organische Farbstoffe usw. vollständig zu CO₂ zu oxidieren.

Gesteuert wird die zweite Aufbereitungsstufe vorteilhaft über die Extinktion des Abwassers. Die Trübung des Abwassers, die durch organische und anorganische Schwebstoffe in diesem entsteht, verringert die Lichtdurchlässigkeit des Abwassers. So bildet die Abwassertrübung einen Anhaltspunkt für den Aufbereitungsgrad des Abwassers. Die Trübung des Abwassers, aber auch eine Einfärbung aufgrund von Farbstoffen, die in diesem gelöst sind, kann mit Hilfe der Extinktion, d.h. einer Messung der Lichtdurchlässigkeit, quantitativ bestimmt werden. Der so ermittelte Wert für die Lichtdurchlässigkeit kann die Grundlage für die Leistungssteuerung der zweiten Aufbereitungsstufe bilden. Beispielsweise ist es denkbar die Extinktion nach der Abwasseraufbereitung in der zweiten Aufbereitungsstufe zu messen und die Leistung der zweiten Aufbereitungsstufe in Abhängigkeit einer gewünschten Reinigungsleistung bzw. eines gewünschten Entfärbungsgrades einzustellen.

Ein positiver Nebeneffekt der in der zweiten Aufbereitungsstufe durchgeführten Elektrolyse zur Bildung von Hydroxylradikalen ist ein Flockungseffekt. In dem Abwasser enthaltende Verunreinigungen werden mittels Agglomeration in größere Flocken überführt. Diese Flockung wird von dem Abwasser vorzugsweise mechanisch getrennt. Beispielsweise kann das Abwasser nach dem Durchlaufen der zweiten Aufbereitungsstufe gefiltert werden und die von dem Filter aufgefangenen Flocken aus dem Abwasser entnommen werden. Auf diese Weise ist eine einfache Trennung von Verunreinigungen und Abwasser möglich.

Vorteilhaft wird dem Abwasser vor der zweiten Aufbereitungsstufe ein Aktivierungsmittel bzw. Katalysator zugeführt. Durch dosierte Zugabe eines Aktivierungsmittels bzw. eines Katalysators kann die Geschwindigkeit der während der Oxidation in der zweiten Aufbereitungsstufe stattfindenden chemischen Reaktionen erhöht werden. Hierdurch wird die Leistung der zweiten Aufbereitungsstufe erhöht und der zur Elektrolyse notwendige Energiebedarf vermindert. Als Aktivierungsmittel bzw. Katalysator wird bei dem erfindungsgemäßen Verfahren bevorzugt Sauerstoff eingesetzt, wobei zur Steigerung der Oxidationsleistung in der zweiten Aufbereitungsstufe dem Abwasser vor dieser vorteilhaft soviel Sauerstoff zugeführt wird, dass die Sauerstoffmenge im Abwasser zwischen 5 - 10 mg/l liegt.

Bevor das Abwasser wieder der ersten Aufbereitungsstufe zugeführt wird, wird es zweckmäßigerweise pH-neutralisiert. Die pH-Neutralisierung des Abwassers ist deshalb erforderlich, um die in der ersten Aufbereitungsstufe lebenden Kleinstlebewesen bzw. Mikroorganismen vor einer sauren und einer alkalischen, für sie lebensfeindlichen Umgebung zu schützen.

Die Erfindung betrifft auch eine Abwasseraufbereitungsanlage zur Ausführung des oben beschriebenen Verfahrens zur Abwasseraufbereitung. In dieser Abwasseraufbereitungsanlage ist eine Vorrichtung zur biologischen Abwasseraufbereitung vorgesehen, die zumindest einen Abwassereinlass sowie einen Auslass aufweist. Ausgangsseitig ist die Vorrichtung zur biologischen Abwasseraufbereitung mit einer Vorrichtung zur chemischen Abwasserbehandlung leitungsverbunden und weist zumindest einen Auslass zur Entnahme des aufbereiteten Wassers auf.

Vorteilhaft ist die Vorrichtung zur chemischen Abwasserbehandlung ausgangsseitig mit dem Abwassereinlass der Vorrichtung zur biologischen Abwasseraufbereitung zum Rückführen des Abwassers leitungsverbunden. Auf diese Weise wird eine Vorrichtung zur biologischen Abwasseraufbereitung so mit einer Vorrichtung zur chemischen Abwasserbehandlung kombiniert, dass eine sehr kompakte Abwasseraufbereitungsanlage entsteht, in der keine weitere Vorrichtung zur biologischen Abwasseraufbereitung erforderlich ist. Entsprechend fallen die Betriebs- und Anlagenkosten der erfindungsgemäßen Abwasseraufbereitungsanlage gegenüber einer Aufbereitungsanlage, die dreistufig ausgebildet ist, d.h. aus zwei Vorrichtungen zur biologischen Abwasseraufbereitung und einer dazwischen angeordneten Vorrichtung zur chemischen Abwasserbehandlung besteht, deutlich geringer aus.

Bevorzugt ist die Vorrichtung zur biologischen Abwasseraufbereitung als Biofiltrationsvorrichtung ausgebildet. In dieser Vorrichtung ist ein Filtermaterial angeordnet, das die in dem Abwasser enthaltenen Schadstoffe adsorbiert. Immobilisierte Mikroorganismen, die sich in und auf dem Filtermaterial befinden, bauen die biologisch abbaubaren Schadstoffe in dieser Vorrichtung ab.

Die Vorrichtung zur chemischen Abwasserbehandlung weist vorzugsweise zumindest eine Elektrode zur Elektrolytumwandlung mit einer Diamantbeschichtung auf.

An der Oberfläche der Elektrode, die in an sich bekannter Weise aus einem elektrisch leitenden Material besteht, ist eine kristalline Diamantbeschichtung angeordnet, die nur wenige tausendstel Millimeter stark ist. Die Diamantbeschichtung bestimmt das elektrochemische Verhalten der Elektrode in einer Weise, die für die Elektrolyse eines aufzubereitenden Abwassers besonders günstig ist. Es ist eine besondere Eigenschaft der Diamantelektroden, dass sie einen Arbeitsbereich liefern, in dem während der Elektrolyse kein Sauerstoff gebildet wird, stattdessen aber Ozon oder aber hochreaktive Hydroxylradikale, mit denen biologisch nur schwer oder gar nicht abbaubare Stoffe in der oben beschriebenen Weise zur Kohlendioxid oxidiert werden können. Des Weiteren ermöglichen die Diamantelektroden durch die Ozonbildung eine Entkeimung des Abwassers, so dass diese Elektroden auch für die Wasserdesinfektion positiv eingesetzt werden können. Die Anzahl der in Vorrichtungen zur chemischen Abwasserbehandlung eingesetzten Diamantelektroden richtet sich in erster Linie nach der Größe dieser Vorrichtungen sowie dem zu erwartenden Abwasserdurchsatz.

Günstig ist die Vorrichtung zur chemischen Abwasserbehandlung über ein Extinktion des Abwassers steuerbar. Hierzu sind beispielsweise hinter der Vorrichtung zur chemischen Abwasserbehandlung Mittel zur Messung der Lichtdurchlässigkeit des Abwassers angeordnet. Bei diesen Mitteln zur Messung der Lichtdurchlässigkeit handelt es sich vorzugsweise um lichtelektrische bzw. photometrische Sensoren, wie beispielsweise Photoelemente und Photodioden, die vorteilhaft auch eine Kolorimetrie des Abwassers ermöglichen. Die von diesen Mitteln quantifizierte Lichtdurchlässigkeit bzw. Einfärbung des Abwassers wird bevorzugt einer Steuerung übermittelt, die die Vorrichtung zur chemischen Abwasserbehandlung auf Grundlage dieser Werte ansteuert, z.B. die Stromstärke steuert.

Zweckmäßigerweise sind Mittel zum Trennen einer Flockung aus dem Abwasser vorgesehen. Diese Mittel sind vorteilhaft hinter der Vorrichtung zur chemischen Abwasserbehandlung angeordnet. Beispielsweise ist es denkbar hier einen Filter vorzusehen, der die bei der chemischen Abwasserbehandlung auftretenden Flocken auffängt.

In der Leitungsverbindung zwischen der Vorrichtung zur biologischen Abwasseraufbereitung und der Vorrichtung zur chemischen Abwasserbehandlung sind in vorteilhafter Weise Mittel zum Zuführen eines Aktivierungsmittels bzw. eines Katalysators angeordnet. Hierbei sind alle Dosiervorrichtungen denkbar, mit denen ein gasförmiges, flüssiges bzw. festes Aktivierungsmittel in diese Leitungsverbindung eingebracht werden kann. Die Dosiervorrichtung kann auch so angeordnet sein, dass der Katalysator direkt in die Vorrichtung zur chemischen Abwasserbehandlung eingebracht wird.

Zweckmäßigerweise weist die Abwasseraufbereitungsanlage einen Auslass zur Entnahme keimfreien Wassers auf. Wegen der bei der Oxidation durch Hydroxylradikale entstehenden Desinfektion des Abwassers ist der Auslass zur Entnahme keimfreien Wassers hinter der Vorrichtung zur chemischen Abwasserbehandlung angeordnet. Besonders vorteilhaft ist es, den Auslass für die Entnahme entkeimten Wassers direkt an der Vorrichtung zur chemischen Abwasserbehandlung vorzusehen.

Die Erfindung ist nachfolgend anhand eines in einer Zeichnung dargestellten Ausführungsbeispiels erläutert. Die Figur zeigt eine Prinzipskizze einer Abwasseraufbereitungsanlage.

In der Figur ist eine Biofiltrationsvorrichtung 2 dargestellt, die über eine Zufuhrleitung 4 mit Abwasser versorgt wird. Zur Belebung der in der Biofiltrationsvorrichtung befindlichen Kleinstlebewesen und Mikroorganismen mündet eine zweite Zufuhrleitung 6 mit einem daran angebundenen Kompressor 8 in die Biofiltrationsvorrichtung 2. Der Kompressor 8 fördert Luft, die über die Zufuhrleitung 6 in die Biofiltrationsvorrichtung 2 geleitet wird. Zur Leistungssteigerung der Biofiltrationsvorrichtung 2 kann dieser über die Zufuhrleitung 6 statt Luft auch ein Sauerstoff-LuftGemisch oder auch reiner Sauerstoff zugeführt werden.

In der Biofiltrationsvorrichtung 2 werden die biologisch abbaubaren Inhaltsstoffe des Abwassers in Gase wie CO₂, CH₄ u.a. sowie in Biomasse umgewandelt. Auf diese Weise wird ein Großteil der im Abwasser befindlichen Inhaltsstoffe abgebaut. Es verbleiben die biologisch nicht abbaubaren Verunreinigungen des Abwassers. Um auch diese abbauen zu können, ist die Biofiltrationsvorrichtung 2 über eine Auslassleitung 10 mit einer Vorrichtung 12 zur chemischen Abwasserbehandlung verbunden, in der diese biologisch nicht abbaubaren Inhaltsstoffe in biologisch abbaubaren Komponenten umgewandelt werden. In der Vorrichtung 12 zur chemischen Abwasserbehandlung sind mehrere in der Figur nicht dargestellte Diamantelektroden angeordnet, die zur Elektrolyse von einem Transformator 14 bestromt werden. Während der Elektrolyse wird das in der Vorrichtung 12 befindliche Abwasser in Wasserstoff und Sauerstoff gespalten, wobei von den Diamantelektroden hochreaktive Hydroxylradikale gebildet werden. Mittels dieser Hydroxylradikale können organische Abwasserverunreinigungen, die biologisch schwer oder gar nicht abbaubar sind, vollständig zu CO₂ oxidiert werden. Gleichzeitig führt die Bildung von Ozon und Hydroxylradikalen zu einer Entkeimung des Abwassers.

Nachdem in der Vorrichtung 12 die biologisch nicht abbaubaren Inhaltsstoffe des Abwassers in biologisch abbaubare Komponenten umgewandelt worden sind, wird das Abwasser über eine Auslassleitung 16 aus dieser Vorrichtung 12 abgeleitet. Die Auslassleitung 16 mündet in einer Leitungsverzweigung 18. Von dieser Leitungsverzweigung 18 zweigt eine Verbraucherleitung 20 ab, über die das keimfreie Wasser entnommen werden kann. Von der Leitungsverzweigung 18 zweigt des Weiteren eine Leitung 22 ab, über die das chemisch behandelte Wasser einen Mischraum 24 zugeführt wird. In dem Mischraum 24 vermischt sich das chemisch behandelte Abwasser, das über die Leitung 22 zugeführt wird mit noch unbehandeltem Wasser, das dem Mischraum 24 über eine Zufuhrleitung 26 zugeführt wird. Der Mischraum 24 ist über die Zufuhrleitung 4 mit der Biofiltrationsvorrichtung leitungsverbunden und eine Pumpe 28, die in der Zufuhrleitung 4 angeordnet ist, fördert das Gemisch aus behandeltem und unbehandeltem Abwasser wieder in die Biofiltrationsvorrichtung 2. Hier wird das Abwasser in Abhängigkeit von seiner Schadstoffbelastung entweder über die Auslassleitung 10 erneut der Vorrichtung zur chemischen Behandlung zugeführt und so in dem von der Zufuhrleitung 4, der Auslassleitung 10 und der Leitung 22 gebildeten Kreislauf geführt oder es wird, wenn es den Aufbereitungsvorgaben entspricht aus der Biofiltrationsvorrichtung 2 über eine Ablassleitung 30 aus der Abwasseraufbereitungsanlage geleitet. Im Normalfall wird das Abwasser bei der dargestellten Abwasseraufbereitungsanlage in bis zu 20 Durchläufen in dem Kreislauf geführt, in denen das Abwasser kontinuierlich aufbereitet wird, ehe es über die Ablassleitung 30 aus der Abwasseraufbereitungsanlage entlassen wird.

In die Auslassleitung 10 zwischen der Biofiltrationsvorrichtung 2 und der Vorrichtung zur chemischen Behandlung des Abwassers 12 mündet der Auslass einer Dosiervorrichtung 32, mit der dem Abwasser Aktivierungsmittel bzw. Katalysatoren, wie z.B. Sauerstoff, zugeführt werden können, die die Oxidationsvorgänge in der Vorrichtung 12 beschleunigen.

Der Leitung 22 ist ein Sensor 34 zugeordnet, der die Extinktion des Abwassers ermittelt. Der Sensor 34 ist mit dem Transformator 14 steuerungsverbunden und leitet die Werte für die Lichtdurchlässigkeit des Abwassers an eine Steuerung des Transformators weiter, die auf der Grundlage dieser Werte die Ausgangsspannung an dem Transformator 14 einstellt, wodurch die Stromstärke des in der Vorrichtung 12 zur chemischen Abwasserbehandlung zwischen den Elektrolyseelektroden fließenden Stroms gesteuert wird.

In dem Mischraum 24 ist ein Rührwerk 24 angeordnet, das von einem Motor 38 angetrieben wird. Das Rührwerk 36 vermischt das durch die Zufuhrleitung 26 dem Mischraum 24 zugeführte unbehandelte Abwasser mit dem Abwasser, das über die Leitung 22 zugeführt wird und schon einmal einen Aufbereitungszyklus in der Biofiltrationsvorrichtung 2 und der Vorrichtung zur chemischen Abwasserbehandlung durchlaufen hat.

Da sich die Wasserstoffkonzentration in dem Abwasser während der Elektrolyse in der Vorrichtung 12 zur chemischen Abwasserbehandlung ändert, ist an dem Mischraum 24 ein pH-Sensor 40 angeordnet, der eine daran angeschlossene Dosiervorrichtung 42 zur dosierten Abgabe von Säure oder Lauge ansteuert, um das zusammengeführte Abwasser in dem Mischraum 24 pH-zuneutralisieren.

### Bezugszeichenliste

- 2: - Biofiltrationsvorrichtung
- 4: - Zufuhrleitung
- 6: - Zufuhrleitung
- 8: - Kompressor
- 10: - Auslassleitung
- 12: - Vorrichtung
- 14: - Transformator
- 16: - Auslassleitung
- 18: - Leitungsverzweigung
- 20: - Verbraucherleitung
- 22: - Leitung
- 24: - Mischraum
- 26: - Zufuhrleitung
- 28: - Pumpe
- 30: - Auslassleitung
- 32: - Dosiervorrichtung
- 34: - Sensor
- 36: - Rührwerk
- 38: - Motor
- 40: - pH-Sensor
- 42: - Dosiervorrichtung

## Patentansprüche

1. Verfahren zur Abwasseraufbereitung, bei dem in einer ersten Aufbereitungsstufe (2) biologisch abbaubare Abwasserinhaltsstoffe abgebaut werden und in einer nachgeordneten zweiten Aufbereitungsstufe (12) biologisch nicht abbaubare Abwasserinhaltsstoffe in biologisch abbaubare Komponenten umgewandelt werden, **dadurch gekennzeichnet, dass** die in der zweiten Aufbereitungsstufe (12) in biologisch abbaubare Komponenten umgewandelten Abwasserinhaltsstoffe wieder der ersten Aufbereitungsstufe (2) zugeführt werden, in welcher sie biologisch abgebaut werden.

2. Verfahren nach Anspruch 1, **dadurch gekennzeichnet, dass** das Abwasser in der ersten und der zweiten Aufbereitungsstufe (2, 12) zumindest teilweise in einem Kreislauf geführt wird.

3. Verfahren nach einem der vorangehenden Ansprüche, **dadurch gekennzeichnet, dass** der Abbau der biologisch abbaubaren Abwasserinhaltstoffe mittels Biofiltration erfolgt.

4. Verfahren nach einem der vorangehenden Ansprüche, **dadurch gekennzeichnet, dass** die Umwandlung der biologisch nicht abbaubaren Abwasserinhaltsstoffe in biologisch abbaubare Komponenten mittels Oxidation erfolgt.

5. Verfahren nach Anspruch 3, **dadurch gekennzeichnet, dass** das Abwasser in der zweiten Aufbereitungsstufe mittels Elektrolyse zur Bildung von Hydroxylradikalen gespalten wird.

6. Verfahren nach einem der vorangehenden Ansprüche, **dadurch gekennzeichnet, dass** die zweite Aufbereitungsstufe (12) mittels einer Extinktion des Abwassers gesteuert wird.

7. Verfahren nach einem der vorangehenden Ansprüche, **dadurch gekennzeichnet, dass** eine während der zweiten Aufbereitungsstufe (12) auftretende Flockung von dem Abwasser vorzugsweise mechanisch getrennt wird.

8. Verfahren nach einem der vorangehenden Ansprüche, **dadurch gekennzeichnet, dass** dem Abwasser vor der zweiten Aufbereitungsstufe (12) ein Aktivierungsmittel bzw. ein Katalysator zugeführt wird.

9. Verfahren nach einem der vorangehenden Ansprüche, **dadurch gekennzeichnet, dass** das Abwasser vor der ersten Aufbereitungsstufe (2) ph-neutralisiert wird.

10. Abwasseraufbereitungsanlage zur Ausführung eines Verfahrens gemäß einem oder mehreren der vorangehenden Ansprüche, mit einer Vorrichtung (2) zur biologischen Abwasseraufbereitung mit zumindest einem Abwassereinlass, wobei die Vorrichtung (2) zur biologischen Abwasseraufbereitung ausgangsseitig mit einer Vorrichtung (12) zur chemischen Abwasserbehandlung leitungsverbunden ist, und mit zumindest einem Auslass zur Entnahme aufbereiteten Wassers, **dadurch gekennzeichnet, dass** die Vorrichtung (12) zur chemischen Abwasserbehandlung ausgangsseitig mit dem Abwassereinlass der Vorrichtung zur biologischen Abwasseraufbereitung zum Rückführen des Abwassers leitungsverbunden ist.

11. Abwasseraufbereitungsanlage nach Anspruch 9, **dadurch gekennzeichnet, dass** die Vorrichtung (2) zur biologischen Abwasseraufbereitung als Biofiltrationsvorrichtung (2) ausgebildet ist.

12. Abwasseraufbereitungsanlage nach einem der vorangehenden Ansprüche, **dadurch gekennzeichnet, dass** die Vorrichtung (12) zur chemischen Abwasserbehandlung zumindest eine Elektrode zur Elektrolytumwandlung mit einer Diamantbeschichtung aufweist.

13. Abwasseraufbereitungsanlage nach einem der vorangehenden Ansprüche, **dadurch gekennzeichnet, dass** die Vorrichtung (12) zur chemischen Abwasserbehandlung über eine Extinktion des Abwassers steuerbar ist.

14. Abwasseraufbereitungsanlage nach einem der vorangehenden Ansprüche, **dadurch gekennzeichnet, dass** Mittel zum Trennen einer Flockung aus dem Abwasser vorgesehen sind.

15. Abwasseraufbereitungsanlage nach einem der vorangehenden Ansprüche, **dadurch gekennzeichnet, dass** in der Leitungsverbindung (10) zwischen der Vorrichtung (2) zur biologischen Abwasseraufbereitung und der Vorrichtung (12) zur chemischen Abwasserbehandlung Mittel (32) zum Zuführen eines Aktivierungsmittels bzw. eines Katalysators angeordnet sind.

16. Abwasseraufbereitungsanlage nach einem der vorangehenden Ansprüche, **dadurch gekennzeichnet, dass** die Abwasseraufbereitungsanlage einen Auslass (20) zur Entnahme keimfreien Wassers aufweist.
